Europäisches Patentamt

European Patent Office

Office européen des brevets

(19)

(11) Veröffentlichungsnummer : **0 162 389**
**B1**

(12)

# EUROPÄISCHE PATENTSCHRIFT

(45) Veröffentlichungstag der Patentschrift :
02.11.89

(51) Int. Cl.⁴ : **E 04 F 21/165// E01C23/09**

(21) Anmeldenummer : **85105802.4**

(22) Anmeldetag : **11.05.85**

(54) Schneidwerkzeug zur Fugenräumung bei Stahlbeton-Sanierung.

(30) Priorität : 19.05.84 DE 3418689

(43) Veröffentlichungstag der Anmeldung :
27.11.85 Patentblatt 85/48

(45) Bekanntmachung des Hinweises auf die Patenterteilung : 02.11.89 Patentblatt 89/44

(84) Benannte Vertragsstaaten :
CH DE FR GB IT LI

(56) Entgegenhaltungen :
DE--C-- 1 000 040
FR--A-- 402 461
FR--A-- 2 092 752
US--A-- 3 020 812
US--A-- 3 020 813
US--A-- 3 110 054

(73) Patentinhaber : Breucha, Hermann Ing.-grad.
Mittelstadtstrasse 52
D-7210 Rottweil (DE)

(72) Erfinder : Breucha, Hermann Ing.-grad.
Mittelstadtstrasse 52
D-7210 Rottweil (DE)

(74) Vertreter : Hubbuch, Helmut, Dipl.-Ing et al
Patentanwälte Dr. Rudolf Bauer Dipl.-Ing. Helmut
Hubbuch Dipl.-Phys. Ulrich Twelmeier Westliche Karl-
Friedrich-Strasse 29-31
D-7530 Pforzheim (DE)

## Beschreibung

Die Erfindung bezieht sich auf ein Schneidwerkzeug zur Fugenräumung bei Stahlbeton-Sanierung mit einem in die Fuge reichenden Schneidmesser.

Zur Stahlbeton-Sanierung an Bauwerken muß zunächst die Kunststoffmasse aus den Dehnungsfugen der Bauwerke entfernt werden, was bisher aufwendig und müsam betrieben wurde (US-PS 3 110 054).

Es ist nun Aufgabe der Erfindung ein gattungsgemäßes Schneidwerkzeug so weiterzubilden, daß die Fugenräumung mit geringem Kraftaufwand, gründlich und zeitsparend durchführbar ist.

Diese Aufgabe wird durch die im kennzeichnenden Teil des Anspruchs 1 angegebenen Merkmale gelöst.

Durch die erfindungsgemäße Ausbildung des Schneidwerkzeugs wird die Fugenräumung bei Stahlbeton-Sanierung wesentlich erleichtert und ist auch in kürzerer Zeit durchführbar.

Zweckmäßige Ausführungsformen der Erfindung sind Gegenstand der Ansprüche 2 bis 13.

Das Schneidwerkzeug gemäß der Erfindung wird im folgenden beispielsweise in der Zeichnung an Hand einer bevorzugten Ausführungsform dargestellt und beschrieben und zwar zeigen:

Figur 1 eine Gesamtansicht eines solchen Schneidwerkzeugs und

Figur 1a und 1b Teilausschnitte als Draufsichten,

Figur 2 die Vorderansicht des Schneidmesserantriebs und

Figur 2a eine Schneidmesservariante.

Wie aus der Zeichnung ersichtlich wird, sind zur Räumung der Betonfuge 1 von der Kunststoffdichtung 2 zwei parallele Schneidmesser 3 mit Messerhaltern 3' versehen vorgesehen, welche im Abstand « a » zur Einstellung auf die Fugenbreite verstellbar sind. Diese Schneidmesser 3 werden von dem Exzenter- oder Kurbeltrieb 4 bei einem Versatz von 180° gegenläufig angetrieben und trennen hierbei das Kunststoffband 2a aus der Fuge 1.

Der Kurbeltrieb 4 wird von einem dahinter liegenden Antrieb 5 — hier als Antriebsritzel dargestellt — über ein Zahnband 6 bewegt. Hierbei dreht der Antrieb 5 über ein Schneckengetriebe 7 gleichzeitig die darunter liegende Transportwalze, welche hier aus Sternrädern 8 mit dazwischen liegendem Endkamm 9 gebildet wird, zum Abtransport des abgetrennten Kunststoffbandes 2a. Hierdurch wird auch die Vorschubbewegung des Werkzeuges bewirkt.

Vor den Schneidmessern 3 und hinter der Zugführung (Transportwalze mit Sternrädern 8) sind Laufrollen 10 zur Führung des Schneidwerkzeugs angeordnet.

Die im Abstand parallel geführten Schneidmesser 3 sind bei senkrechter Anordnung zur Fugenbreite auswechselbar und bilden in Schneidrichtung « S » einen spitzen Winkel 3a und weisen an ihrer Schneidkante einen Wellenschliff 3b auf.

Der Transportwalze mit Sternrädern 8 oder als Rändelrad zum Abtransport des Kunststoffbandes 2a folgt mindestens eine Düse 11 für eine Gasflamme zum Verbrennen der Kunststoffrückstände an den Rändern der Fuge 1. Anstelle einer Gasflamme kann die Düse auch für einen Stickstoffstrahl zum Verspröden der Kunststoffrückstände treten.

Schließlich können zum Abschluß noch in die Fuge 1 reichende, sich drehende Stahlbürsten 12 vorgesehen sein. Der Antrieb der Stahlbürsten 12 erfolgt wiederum vom Antriebsritzel 5 über ein Zahnband 13 und dem Kegelantrieb 14 bei zur Fugenbreite senkrechter Lagerung 15 der Bürsten 12. Hier ist je eine Stahlbürste 12 für die linke und rechte Fugenwand vorgesehen.

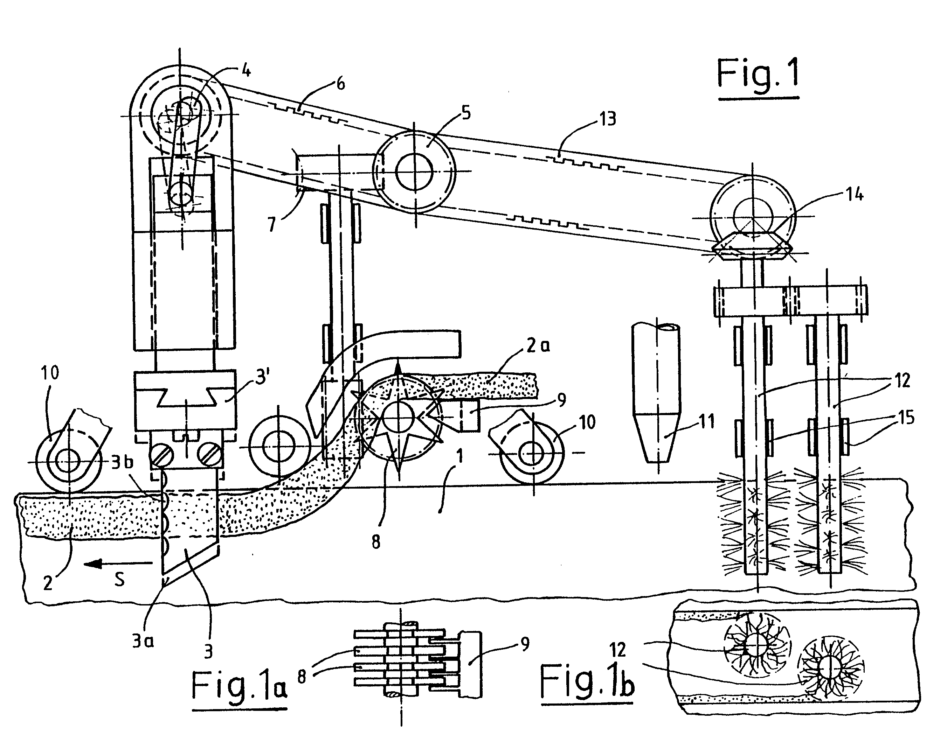

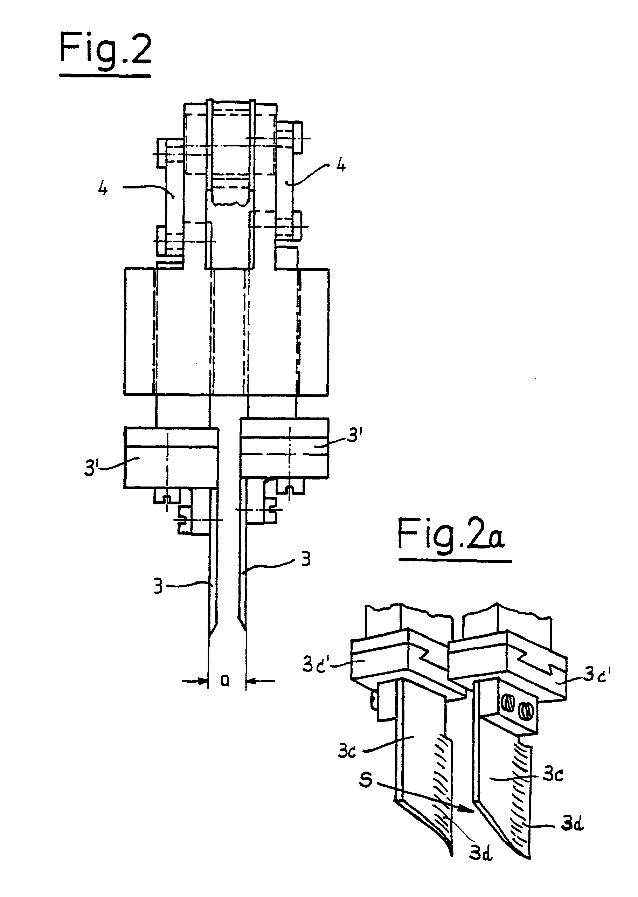

Anstelle der in Figur 1 und 2 dargestellten Schneidmesser 3 mit Haltern 3' können auch Schneidmesser 3c mit Haltern 3c' entsprechend Figur 2a Verwendung finden, welche bei federnder Ausbildung an ihrer Schneidkante 3d bei Schneidrichtung « S » jeweils zur Fugenflanke hin gebogen sein, d. h. eine Hohlkehle bilden. Durch diese Messerausbildung werden diese beim Lösen der Fugendichtmasse an die Fugenflanken federnd gedrückt und Sorgen so für eine saubere Fuge, sowie für einen sicheren Abtransport durch die freischnittartige Messerformgebung.

## Patentansprüche

1. Schneidwerkzeug zur Fugenräumung bei Stahlbeton-Sanierung mit einem in die Fuge (1) reichenden Schneidmesser (3 ; 3c), gekennzeichnet durch zwei im Abstand parallel verstellbare, mittels Exzenter- oder Kurbeltrieb (4) gegenläufig bewegbare Schneidmesser (3 ; 3c) mit dahinter angeordneter Vorrichtung (8, 9) zum Abtransport des beidseits abgetrennten Kunststoffugenbandes (2a).

2. Schneidwerkzeug nach Anspruch 1, dadurch gekennzeichnet, daß die Bewegung des Exzenteroder Kurbeltriebs (4) für die parallelgeführten Schneidmesser (3 ; 3c) vom dahinterliegenden Antrieb (5) über ein Zahnband (6) erfolgt und daß dieser Antrieb (5) gleichzeitig auch über ein Schneckengetriebe (7) zur Drehung einer den Abtransport des abgetrennten Fugenbandes (2a) bewirkenden, unterhalb des Antriebs angeordneten Transportwalze dient.

3. Schneidwerkzeug nach Anspruch 2, dadurch gekennzeichnet, daß vor den Schneidmessern (3 ; 3c) und hinter der Transportwalze Laufrollen (10) zur Führung des Schneidwerkzeugs angeordnet sind.

4. Schneidwerkzeug nach einem der Ansprüche 1 bis 3, dadurch gekennzeichnet, daß die Schneidmesser auswechselbar angeordnet sind und in Schneidrichtung eine einen spitzen Winkel (3a) bildende Schneidkante (3d) und eine mit Wellenschliff (3b) versehene Vorderkante aufweisen.

5. Schneidwerkzeug nach einem der Ansprüche 2 bis 4, dadurch gekennzeichnet, daß die Transportwalze aus Sternrädern (8) mit dazwischenliegendem Endkamm (9) gebildet ist.

6. Schneidwerkzeug nach einem der Ansprüche 2 bis 5, dadurch gekennzeichnet, daß der Transportwalze mindestens eine Düse (11) für eine Gasflamme zum Verbrennen der Kunststoffrückstände an den Fugenrändern nachgeordnet ist.

7. Schneidwerkzeug nach einem der Ansprüche 2 bis 5, dadurch gekennzeichnet, daß der Transportwalze mindestens eine Düse (11) für Stickstoff zum Verspröden der Kunststoffrückstände an den Fugenrändern nachgeordnet ist.

8. Schneidwerkzeug nach Anspruch 6 oder 7, dadurch gekennzeichnet, daß der Düse in die Fuge reichende, sich drehende Stahlbürsten (12) nachgeschaltet sind.

9. Schneidwerkzeug nach Anspruch 8, dadurch gekennzeichnet, daß die Stahlbürsten vom Antrieb über ein Zahnband (13) am Zahngetriebe und über einen Kegeltrieb (14) drehbar sind.

10. Schneidwerkzeug nach Anspruch 8 oder 9, dadurch gekennzeichnet, daß mindestens je eine Stahlbürste (12) für die linke und für die rechte Fugenwand vorgesehen sind.

11. Schneidwerkzeug nach einem der vorhergehenden Ansprüche, dadurch gekennzeichnet, daß die parallelen Schneidmesser und auch die Achsen der sich drehenden Stahlbürsten (12) bei deren Nachschaltung senkrecht zur Fugenbreite gerichtet sind.

12. Schneidwerkzeug nach einem der vorhergehenden Ansprüche, insbes. Anspruch 1, dadurch gekennzeichnet, daß die auswechselbaren Schneidmesser bei federelastischer Ausbildung an ihrer Schneidkante (3d) jeweils zur Fugenflanke hin gebogen sind.

13. Schneidwerkzeug nach einem der vorhergehenden Ansprüche, dadurch gekennzeichnet, daß die Transportwalze mit einer Rändelung als Rändelrad ausgestaltet ist.

## Claims

1. Cutting tool for joint clearing in restoration of reinforced concrete with a cutting knife (3 ; 3c) reaching into the joint (1), characterised by two cutting knives (3 ; 3c) adjustable at a distance in parallel and movable in a counter-rotating manner by means of an eccentric or crank mechanism (4) with a device (8, 9) arranged behind for the removal of the synthetic joint strip (2a) separated on both sides.

2. Cutting tool according to claim 1, characterised in that the movement of the eccentric or crank mechanism (4) for the cutting knife (3 ; 3c) operated in parallel by the drive (5) behind it takes place by means of a toothed belt and in that this drive (5) serves at the same time by means of a worm drive (7) to turn a transportation roller arranged underneath the drive effecting the removal of the separated joint band (2a).

3. Cutting tool according to claim 2, characterised in that in front of the cutting knives (3, 3c) and behind the transportation roller, rollers (10) are arranged for guiding the cutting tool.

4. Cutting tool according to one of claims 1 to 3, characterised in that the cutting knives are arranged so as to be interchangeable and have an edge of cut (3a) forming a sharp angle (3d) in the direction of cut and a front edge provided by cylindrical grind (3b).

5. Cutting tool according to one of claims 2 to 4, characterised in that the transportation roller is formed from star wheels (8) with an end cog (9) between them.

6. Cutting tool according to one of claims 2 to 5, characterised in that at least one nozzle (11) for a gas flame for burning the remainder of the synthetic material at the joint edges is arranged behind the transportation roller.

7. Cutting tool according to one of claims 2 to 5, characterised in that at least one nozzle (11) for nitrogen for embrittling the remainder of the synthetic material at the joints edges is arranged behind the transportation roller.

8. Cutting tool according to claim 6 or 7, characterised in that rotating steel brushes (12) reaching into the joint are connected at the outlet side of the nozzle.

9. Cutting tool according to claim 8, characterised in that the steel brushes are rotatable by the drive by means of a toothed belt (13) on the toothed gear and by means of a cone drive.

10. Cutting tool according to claim 8 or 9, characterised in that at least one steel brush is provided for the left and for the right joint wall.

11. Cutting tool according to one of the preceding claims, characterised in that the parallel cutting knives and also the axes of the rotating steel brushes (12) are arranged perpendicularly to the breadth of the joint in the case of their being connected at the exit side.

12. Cutting tool according to one of the preceding claims, in particular claim 1, characterised in that the interchangeable cutting knives in the case of a resilient portion at their cutting edge are (3d) bent towards the joint flank.

13. Cutting tool according to one of the preceding claims, characterised in that the transportation roller is designed with a knurling in the manner of a knurled wheel.

## Revendications

1. Outil de coupe qui, destiné à dégager des joints lors de l'assainissement de béton armé, comporte une lame tranchante (3 ; 3c) pénétrant dans le joint (1), caractérisé par deux lames tranchantes (3 ; 3c) réglables parallèlement dans leur espacement et déplaçables en sens opposé l'une par rapport à l'autre au moyen d'un mécanisme d'entraînement à excentrique ou à manivelle (4) et, monté derrière ces lames, un dispositif (8, 9) pour évacuer le ruban de matière synthétique (2a) détaché des deux côtés.

2. Outil de coupe selon la revendication 1, caractérisé en ce que le mouvement du mécanisme d'entraînement à excentrique ou à manivelle (4) pour les lames tranchantes (3 ; 3c) guidées parallèlement se réalise à partir de l'organe d'entraînement disposé derrière ce dernier par l'intermédiaire d'une courroie crantée (6) et en ce que cet organe d'entraînement (5) sert en même temps également, par l'intermédiaire d'un engrenage à vis sans fin (7), à faire tourner un cylindre transporteur monté au-dessous de l'organe d'entraînement (5) et qui effectue l'évacuation du ruban de joint (2a) détaché.

3. Outil de coupe selon la revendication 2, caractérisé en ce que devant les lames tranchantes (3 ; 3c) et derrière le cylindre transporteur sont montés des galets de roulement (10) pour guider l'outil de coupe.

4. Outil de coupe selon l'une quelconque des revendications précédentes, caractérisé en ce que les lames tranchantes sont échangeables et présentent dans la direction de coupe une arête tranchante (3d) formant un angle aigu (3a), et un bord avant muni d'un tracé d'aiguisage ondulé (3b).

5. Outil de coupe selon l'une quelconque des revendications 2 à 4, caractérisé en ce que le cylindre transporteur est constitué de roues étoilées (8) avec un peigne terminal (9) interposé entre ces dernières.

6. Outil de coupe selon l'une quelconque des revendications 2 à 5, caractérisé en ce qu'à la suite du cylindre transporteur est montée au moins une buse (11) pour une flamme de gaz destinée à brûler les restes matière synthétique subsistant aux bords du joint.

7. Outil de coupe selon l'une quelconque des revendications 2 à 5, caractérisé en ce qu'à la suite du cylindre transporteur est montée au moins une buse (11) pour de l'azote destiné à fragiliser les restes de matière synthétique subsistant aux bords du joint.

8. Outil de coupe selon la revendication 6 ou 7, caractérisé en ce qu'à la suite de la buse sont montées des brosses métalliques rotatives (12) qui pénètrent dans le joint.

9. Outil de coupe selon la revendication 8, caractérisé en ce que les brosses métalliques peuvent être tournées par l'organe d'entraînement (5) par l'intermédiaire d'une courroie crantée (13) au niveau de l'engrenage vis sans fin et par l'intermédiaire d'un mécanisme de transmission à engrenage conique (14).

10. Outil de coupe selon la revendication 8 ou 9, caractérisé en ce qu'il est prévu au moins une brosse métallique (12) respectivement pour la paroi gauche et pour la paroi droite du joint.

11. Outil de coupe selon l'une quelconque des revendications précédentes, caractérisé en ce que les lames tranchantes parallèles et également les axes des brosses métalliques rotatives (12) sont, lors de leur montage, orientés perpendiculairement à la largeur du joint.

12. Outil de coupe selon l'une quelconque des revendications précédentes et, en particulier, la revendication 1, caractérisé en ce que les lames tranchantes échangeables, en étant réalisées de façon à être élastiquement déformables, sont chacune, au niveau de leur arête tranchante (3d), recourbées en direction du flanc de joint respectif.

13. Outil de coupe selon l'une quelconque des revendications précédentes, caractérisé en ce que le cylindre transporteur est muni d'un moletage de façon à être réalisé en tant que molette.

Fig.1

Fig.1a

Fig.1b

EP 0 162 389 B1

Fig.2

Fig.2a